# EUROPEAN PATENT APPLICATION

(11) **EP 2 693 729 A1**
(43) Date of publication of application: **05.02.2014**
(21) Application number: 12764545.5
(22) Date of filing: 27.03.2012
(51) Int. Cl.: H04M 3/00, H04M 11/00

(54) **FAULT MONITORING DEVICE HAVING RADIO MAINTENANCE COMMUNICATION FUNCTION, AND FAULT MONITORING METHOD**

(30) Priority: 30.03.2011 JP 2011073804
(71) Applicant: NEC Corporation, Tokyo 108-8001 (JP)
(72) Inventor: OGAWA Takatoshi, Tokyo 108-8001 (JP); MIYAMOTO Hiroaki, Tokyo 108-8001 (JP)
(74) Representative: MacDougall, Alan John Shaw
(86) International application number: PCT/JP2012/057914
(87) International publication number: WO 2012/133395

(57) **Abstract**

An outdoor fault monitoring device carries out radio maintenance communication with a maintenance terminal, positioned at a remote place, wherein a fault monitoring function part monitors occurrence/non-occurrence of a fault in a primary device function part. Upon detecting occurrence of a fault, the fault monitoring function part activates a radio maintenance function part. Alternatively, the fault monitoring function part deactivates the radio maintenance communication function part due to non-occurrence of a fault. In this case, it is possible to deactivate the radio maintenance communication function part upon detecting disconnection of a radio maintenance communication. Thus, it is possible to improve security against communication jamming created by a malicious person. Additionally, it is possible to suppress power consumption and to reduce a processing load by preventing unnecessary radio communication.

## Description

### TECHNICAL FIELD

The present invention relates to an outdoor fault monitoring device which monitors communication faults occurring in communication lines and data transmission lines and which allows for remote-operated maintenance work, and in particular to a fault monitoring device having a radio maintenance communication function, and a fault monitoring method.

The present application claims priority based on Japanese Patent Application No. 2011-73804 filed March 30, 2011, the entire content of which is incorporated herein by reference.

### BACKGROUND ART

Conventionally, outdoor fault monitoring devices for monitoring communication lines and data transmission lines have been known. Patent Literature 1 discloses a technology for carrying out maintenance work on a monitoring device, which is positioned at an inaccessible location for working and which is equipped with a radio communication function, from a remote place. However, a monitoring device with a general-purpose radio communication function, which is positioned at an inaccessible location for working, may involve a high risk of being attacked by a malicious person via communication jamming.

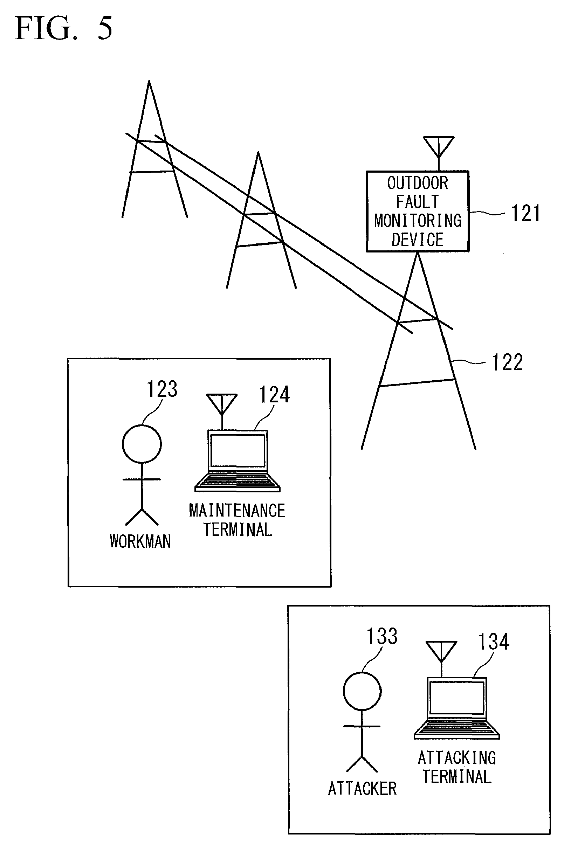

Fig. 5 shows an example of a maintenance monitoring system using a monitoring device which is positioned at an inaccessible location for working. In Fig. 5, an iron tower 122 is equipped with an outdoor fault monitoring device 121. The outdoor fault monitoring device 121 is wirelessly connected to a maintenance terminal 124 which is positioned in a remote place. A workman 123 using the maintenance terminal 124 carries out maintenance work by way of remote control of the outdoor fault monitoring device 121, which is positioned at an inaccessible location for working, from a remote place.

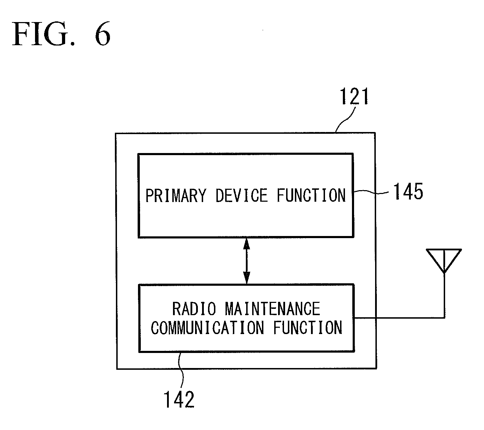

As shown in Fig. 6, the outdoor fault monitoring device 121 having a radio communication function includes a radio maintenance communication function part 142 and a primary device function part 145. The primary device function part 145 is a processing device which carries out data communication, using the radio maintenance communication function part 142, with the maintenance terminal 124 so as to implement various functions. The radio maintenance communication part 142 is a radio communication device which carries out radio communication with the maintenance terminal 124.

The radio maintenance communication function part 142 installed in the outdoor fault monitoring device 121 adopts general-purpose radio communication methods such as communication protocols of IEEE802.11a/b/g/n, referred to as Wi-Fi, and a communication protocol of IEEE802.15 referred to as Bluetooth. Thus, it is possible for the outdoor fault monitoring device 121 to easily achieve a radio communication function having desired functionality. By adopting general-purpose radio communication methods, it is possible to reduce the cost for introducing a radio communication function, and it is possible to easily achieve communication with other radio communication devices.

In the maintenance monitoring system shown in Fig. 5, the outdoor fault monitoring device 121 having a general-purpose radio communication device may invoke a malicious person (e.g. an attacker 133) to wirelessly connect to the outdoor fault monitoring device 121 by use of a general-purpose terminal (e.g. an attacking terminal 134). In this case, there is a possibility that the attacker 133 may operate the attacking terminal 134 to commit malicious sabotage or cause communication failure in the outdoor fault monitoring device 121.

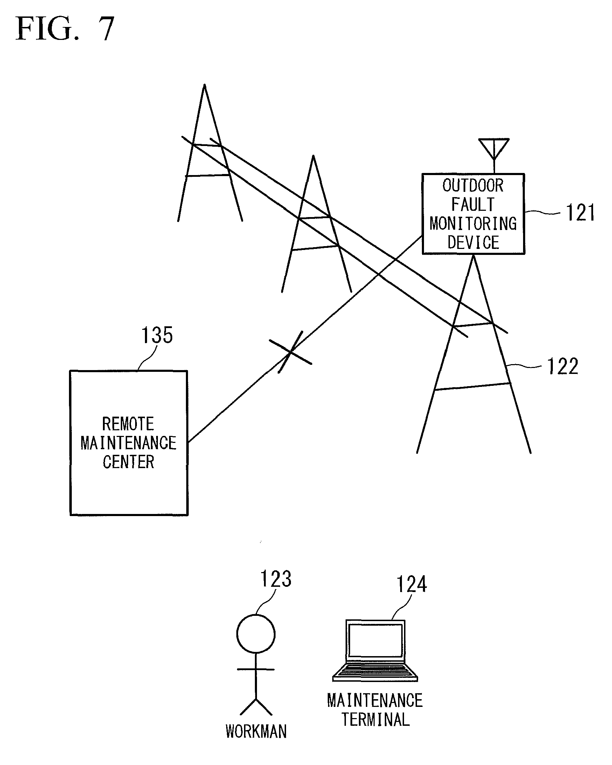

Maintenance work on the outdoor fault monitoring device 121, which is positioned at an inaccessible location for working, may give rise to a problem in terms of safety and working time of workmen. Fig. 7 shows a maintenance monitoring system in which a remote maintenance center 135 is connected to the outdoor fault monitoring device 121 attached to an iron tower 122. With a setting for activating a radio maintenance communication function in the remote maintenance center 135, the workman 133 is allowed to carries out maintenance work without visiting an inaccessible location for working.

However, it is necessary to connect the maintenance terminal 124 to the outdoor fault monitoring device 121 via wires when a communication line between the remote maintenance center 135 and the outdoor fault monitoring device 121 is disconnected for an unknown reason. In this case, the workman 123 needs to approach the outdoor fault monitoring device 121, climb up the iron tower 122, and directly connect the maintenance terminal 124 to the outdoor fault monitoring device 121. This operation may give rise to a problem in terms of safety and working time of the workman 123.

As shown in Fig. 6, the outdoor fault monitoring device 121 needs to operate the radio maintenance communication function part 142, thus increasing power consumption. This is not preferable in terms of energy efficiency and environmental factors. Additionally, the radio maintenance communication function part 142 precluding a control function needs to control the radio maintenance communication function part 142 via an external device. In this case, the primary device function part 145 bears a processing load of the radio maintenance communication function part 142 to entail a reduction of processing due to resource conflicts. To compensate for a reduction of processing in the primary device function part 145, the primary device function part 145 needs to install a high-level and high-speed processing part therein, which may increase the manufacturing cost of the outdoor fault monitoring device 121.

### CITATION LIST

### PATENT LITERATURE

Patent Literature 1: Japanese Patent Application Publication No. 2008-5040

### SUMMARY OF INVENTION

### TECHNICAL PROBLEM

By using the aforementioned monitoring device having a general-purpose radio maintenance communication function, which is positioned at an inaccessible location for working, maintenance work from a remote place may involve a high risk of being attacked by a malicious person via communication jamming. Additionally, a monitoring device having a radio maintenance communication function may have a problem about an increase in power consumption and a reduction of processing.

The present invention is made in consideration of the aforementioned circumstances, wherein it is an object of the present invention to provide a fault monitoring device and a fault monitoring method which carry out radio maintenance communication with a maintenance terminal so as to receive and transmit fault information, which improve security against malicious persons, and which prevent a reduction of processing.

### SOLUTION TO PROBLEM

A fault monitoring device of the present invention includes a radio maintenance communication function part which receives and transmits fault information by way of radio maintenance communication with a maintenance terminal; and a fault monitoring function part which determines occurrence/non-occurrence of a fault and which activates or deactivates the radio maintenance communication function part in response to the occurrence/non-occurrence of a fault.

A fault monitoring method of the present invention includes: receiving and transmitting fault information by way of radio maintenance communication with the maintenance terminal; determining occurrence/non-occurrence of a fault; and activating or deactivating a radio maintenance communication function in response to the occurrence/non-occurrence of a fault.

A fault monitoring program of the present invention cause a computer to execute a step of receiving and transmitting fault information by way of radio maintenance communication with the maintenance terminal; a step of determining occurrence/non-occurrence of a fault; and a step of activating or deactivating a radio maintenance communication function in response to the occurrence/non-occurrence of a fault.

### ADVANTAGEOUS EFFECTS OF INVENTION

The present invention determines occurrence/non-occurrence of faults so as to activate or deactivate the radio maintenance communication function in response to occurrence/non-occurrence of faults, and therefore it is possible to activate the radio maintenance communication function solely in a certain period of time requiring maintenance work, and it is possible to reduce a security risk due to communication jamming created by a malicious person. Since the radio maintenance communication function is deactivated when maintenance work is not carried out, it is possible to reduce power consumption. Additionally, it is possible to prevent a reduction of processing due to resource conflicts occurred between the radio maintenance communication function and the primary device function, and therefore it is unnecessary to use an expensive high-level and high-speed processor to achieve the primary device function.

### BRIEF DESCRIPTION OF DRAWINGS

[Fig. 1] A block diagram of an outdoor fault monitoring device according to a first embodiment of the present invention.
[Fig. 2] A flowchart of the outdoor fault monitoring device according to the first embodiment of the present invention.
[Fig. 3] A flowchart of an outdoor fault monitoring device according to a second embodiment of the present invention.
[Fig. 4] A flowchart of an outdoor fault monitoring device according to a third embodiment of the present invention.
[Fig. 5] A schematic diagram showing an example of a maintenance monitoring system using an outdoor fault monitoring device positioned at an inaccessible location for working.
[Fig. 6] A block diagram of the outdoor fault monitoring device shown in Fig. 5.
[Fig. 7] A schematic diagram showing a maintenance monitoring system in which a remote maintenance center is connected to an outdoor fault monitoring device positioned at an inaccessible location for working.

### DESCRIPTION OF EMBODIMENTS

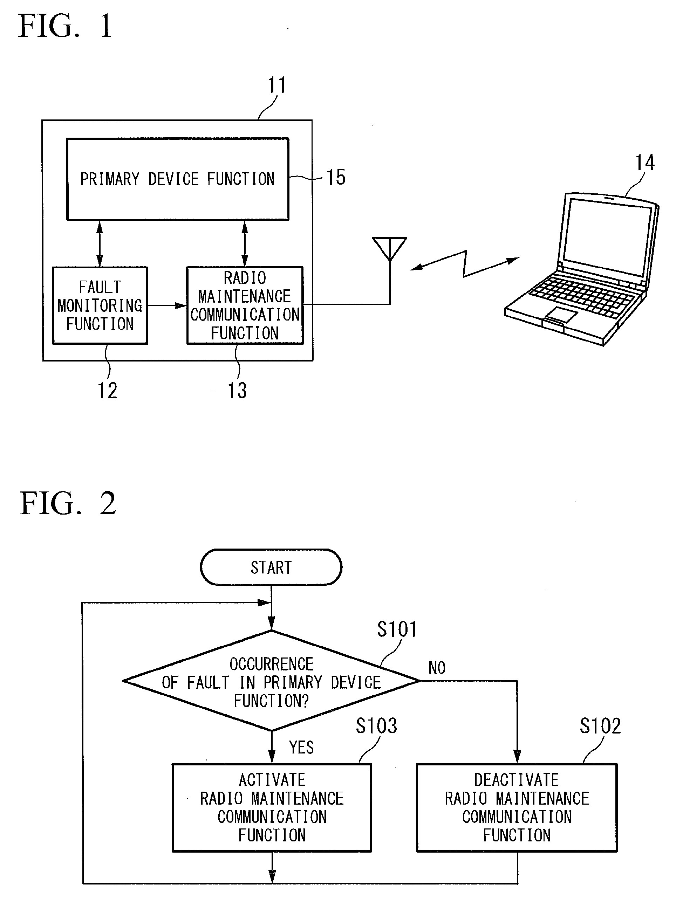

Fig. 1 is a block diagram of an outdoor monitoring device 11 according to a first embodiment of the present invention. The outdoor monitoring device 11 includes a fault monitoring function part 12, a radio maintenance communication function part 13, and a primary device function part 15.

Upon detecting occurrence of a fault, the fault monitoring function part 12 activates power supply to the radio maintenance communication function part 13. When no fault occurs, the fault monitoring function part 12 deactivates power supply to the radio maintenance communication function part 13. When a fault occurs, the fault monitoring function part 12 starts the processing of the radio maintenance communication function part 13.

The primary device function part 15 is a processing device which communicates with the maintenance terminal 14 by use of the radio maintenance communication function part 13. Under control of the fault monitoring function part 12, the radio maintenance communication function part 13 is wirelessly connected to the maintenance terminal 14 via a maintenance communication, thus conducting transmission and reception of fault information between the primary device function part 14 and the maintenance terminal 14.

As a radio communication method applied between the radio maintenance communication function part 13 and the maintenance terminal 14, it is possible to adopt generally-used radio communication functions such as a communication protocol ofIEEE802.11a/b/g/n, referred to as Wi-Fi, and a communication protocol of IEEE802.15 referred to as Bluetooth.

In this connection, radio communication functions installed in the radio maintenance communication function part 13 and the maintenance terminal 14 are known for skilled persons in the art and do not form the characteristic parts of the present invention; hence, detailed descriptions thereof will be omitted. Additionally, the primary device function 15 is a connected destination of a maintenance communication via the maintenance terminal 14 and does not form the characteristic parts of the present invention; hence, detailed descriptions thereof will be omitted.

Fig. 2 is a flowchart of the outdoor fault monitoring device 11. In Fig. 2, when the outdoor fault monitoring device 11 performs its processing, the fault monitoring function part 12 determines whether or not a fault occurs in the primary device function part 15 (step S101). Upon determining non-occurrence of a fault in the primary device function part 15, the fault monitoring function part 12 deactivates the radio maintenance communication function part 13 (step S102). Thus, when no fault occurs in the primary device function part 15, the fault monitoring function part 12 repeats steps S101 and S102, thus deactivating the radio maintenance communication function part 13.

Upon determining the occurrence of a fault in the primary device function part 15 in step S101, the fault monitoring function part 12 activates the radio maintenance function part 13 (step S103). Thus, when a fault occurs in the primary device function part 15, the fault monitoring function part 12 repeats steps S101 and S103, thus activating the radio maintenance communication function part 13.

As described above, the outdoor fault monitoring device 11 is designed such that the fault monitoring function part 12 monitors occurrence/non-occurrence of a fault in the primary device function part 15, wherein power supply to the radio maintenance communication function part 13 is activated due to occurrence of a fault, while power supply to the radio maintenance communication function part 13 is deactivated due to non-occurrence of a fault. Thus, it is possible to improve a security against communication jamming created by a malicious person, and it is possible to suppress power consumption and to reduce a processing load to the primary device function part 15.

Next, a second embodiment of the present invention will be described. The second embodiment of the present invention employs the basic configuration identical to that of the first embodiment and is realized using the outdoor fault monitoring device 11 shown in Fig. 1. Compared with the first embodiment, the second embodiment of the present invention aims to further improve maintainability during execution of maintenance work. In the second embodiment of the present invention, the fault monitoring function part 12 does not disconnect a radio maintenance communication between the radio maintenance communication function part 13 and the maintenance terminal 14 in order to carry out maintenance work on condition that no fault occurs in the primary device function part 15. That is, until completion of maintenance work, the fault monitoring function part 12 activates the radio maintenance communication function part 13, thus improving maintainability in maintenance work.

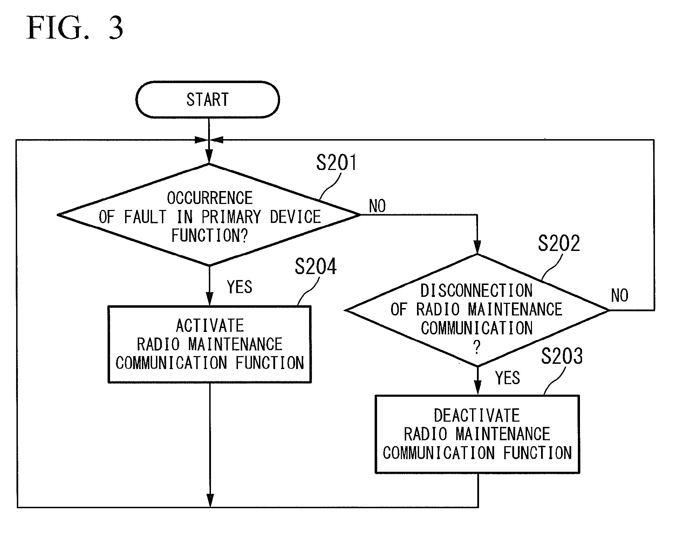

Fig. 3 is a flowchart of the outdoor fault monitoring device 11 according to the second embodiment of the present invention.

In Fig. 3, when the outdoor fault monitoring device 11 starts its processing, the fault monitoring function part 12 determines whether or not a fault has occurred in the primary device function part 15 (step S201). Upon determining non-occurrence of a fault, the fault monitoring function part 12 determines whether or not a radio maintenance communication is disconnected (step S202). When a radio maintenance communication is not disconnected in step S202 because maintenance work is being carried out using the maintenance terminal 14, the fault monitoring function part 12 repeats steps S201 and S202. Upon determining occurrence of a fault in step S201, the fault monitoring function part 12 activates the radio maintenance communication function part 13 (step S204). Activating the radio maintenance communication function part 13 denotes a control operation for turning on power supply and for activating radio communication. Upon determining disconnection of a radio maintenance communication in step S202 when maintenance work is not carried out, the fault monitoring function part 12 deactivates the radio maintenance communication function part 13 (step S203). In this case, the fault monitoring function part 12 repeats steps S201, S202, and S203.

When no fault occurs in the primary device function part 15, the second embodiment of the present invention determines whether or not a radio maintenance communication is disconnected via conditional branching in step S202, wherein it repeats steps S201 and S202 due to non-disconnection of a radio maintenance communication. The fault monitoring function part 12 maintains the activated state of the radio maintenance communication function part 13 during execution of maintenance work via a radio maintenance communication with the maintenance terminal 14 until completion of maintenance work. Thus, the second embodiment of the present invention is able to improve maintainability in maintenance work because the fault monitoring function part 12 maintains the activated state of the radio maintenance communication function part 13 until completion of maintenance work.

Next, a third embodiment of the present invention will be described. The basic configuration of the third embodiment of the present invention is identical to the outdoor fault monitoring device 11 shown in Fig. 1. Compared with the first embodiment, the third embodiment aims to further improve maintainability during execution of maintenance work and further reduce power consumption. In the outdoor fault monitoring device 11 according to the third embodiment of the present invention, when a fault occurs in the primary device function part 15 during execution of maintenance work with the maintenance terminal 14, the fault monitoring function part 12 does not disconnect a radio maintenance communication but maintains the activated state of the radio maintenance communication function part 13 until completion of maintenance work. Additionally, the fault monitoring function part 12 sets a maintenance access-permit time as a specified time elapsed after activation of the radio maintenance communication function part 13. Thus, it is possible to improve maintainability during the fault state continued in the primary device function part 15, and it is possible to reduce unnecessary activation time for the radio maintenance communication function part 13 before starting maintenance work, thus reducing a security risk.

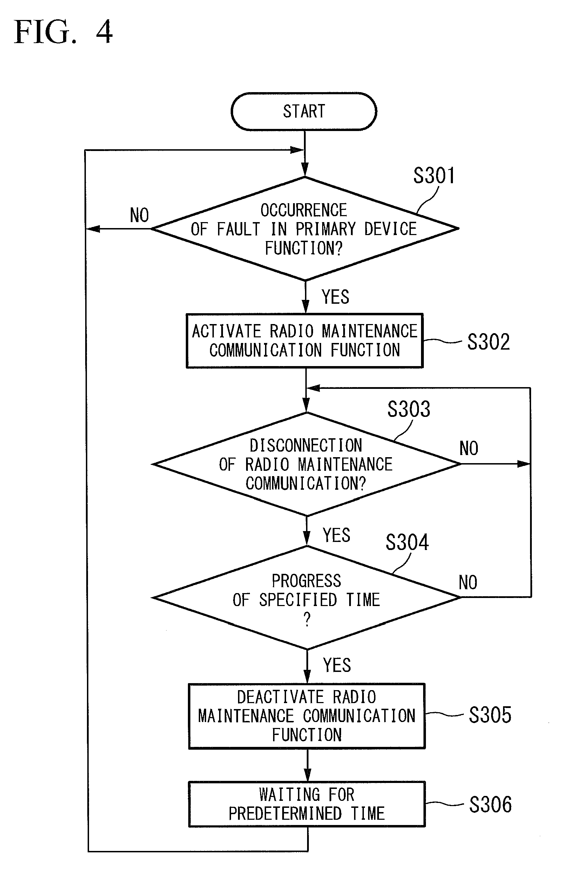

Fig. 4 is a flowchart of the outdoor fault monitoring device 11 according to the third embodiment of the present invention.

In Fig. 4, when the outdoor fault monitoring device 11 starts it processing, the fault monitoring device 12 determines whether or not a fault occurs in the primary device function part 15 (step S301). Upon determining occurrence of a fault, the fault monitoring function part 12 activates the radio maintenance communication function part 13 (step S302). Subsequently, the fault monitoring function part 12 determines whether or not a radio maintenance communication with the maintenance terminal 14 is disconnected (step S303). When a radio maintenance communication is not disconnected, the fault monitoring function part 12 repeats step S303 so as to maintain the activated state of the radio maintenance communication part 13. Upon determining disconnection of a radio maintenance communication in step S303 when maintenance work is not carried out with the maintenance terminal 14, the fault monitoring function part 12 determines whether or not the specified time has elapsed after activation of the radio maintenance communication function part 13 (step S304). The fault monitoring function part 12 repeats steps S303 and S304 until the specified time has elapsed. Subsequently, upon determining lapse of specified time in step S304, the fault monitoring function part 12 deactivates the radio maintenance communication function part 13 (step S305). Then, the fault monitoring function part 12 waits for a predetermined time (step S306). The fault monitoring function part 12 repeatedly performs steps S301 to S306 after execution of step S306. In this connection, the waiting time of step S306 denotes guard time (i.e. time preventing reactivation of the radio maintenance communication function) which prevents an operation error in the radio maintenance communication function.

The third embodiment repeats a series of steps following step S301 after inactivation of the radio maintenance communication function part 13 in step S305, whereby it is possible to maintain the inactivated state of the radio maintenance communication part 13 on condition that no fault occurs in the primary device function part 15.

As described above, when a fault occurs in the primary device function part 15, the third embodiment activates the radio maintenance communication function part 13 in step S302, and then determines whether or not a radio maintenance communication is disconnected in step S303, wherein it repeats step S303 when a radio maintenance communication is not disconnected. Thus, the fault monitoring function part 12 maintains the activated state of the radio maintenance communication part 13 during execution of maintenance work until completion of maintenance work. The control method of the third embodiment is identical to that of the second embodiment. Additionally, the third embodiment makes a conditional determination regarding the lapse of the specified time, wherein the fault monitoring function part 12 secures specified time as maintenance connection allowable time after activating the radio maintenance communication function part 13. Thus, it is possible to improve maintainability during the fault state continued in the primary device function part 15. It is possible to reduce unnecessary activation time of the radio maintenance communication function part 13 before maintenance work since the fault monitoring function part 12 waits for a predetermined time in step S306 after deactivating the radio maintenance communication function part 13 in step S305. It is possible to reduce a security risk since the third embodiment of the present invention improves maintainability during the fault state continued in the device function part 15 and reduces unnecessary activation time of the radio maintenance communication function part 13 before starting maintenance work.

The functionality of the present invention can be achieved using software in addition to hardware and achieved as a fault monitoring program realizing the control method of Fig. 2, Fig. 3, and Fig. 4. In this case, it is possible to store a fault monitoring program in various storage media, which can be delivered. Alternatively, it is possible to register a fault monitoring program in a server or a provider in advance and to download the fault monitoring program to a monitoring device or a maintenance center via telecommunication lines according to needs. Moreover, it is possible to configure a fault monitoring program as a subprogram related to a main program of a monitoring device.

Lastly, the present invention is not necessarily limited to the foregoing embodiments and may embrace various variations within the scope of the invention as defined in the appended claims.

### INDUSTRIAL APPLICABILITY

The present invention provides a technology for reducing a fault occurrence risk such as communication jamming created by a malicious person and for suppressing power consumption of radio communication when radio maintenance work is carried out on an outdoor fault monitoring device, positioned at an inaccessible location for working, by use of a maintenance terminal.

### REFERENCE SIGNS LIST

- 11: outdoor fault monitoring device
- 12: fault monitoring function part
- 13: radio maintenance communication function part
- 14: maintenance terminal
- 15: primary device function part

## Claims

1. A fault monitoring device comprising:
a radio maintenance communication function part which receives and transmits fault information by way of radio maintenance communication with a maintenance terminal; and
a fault monitoring function part which determines occurrence/non-occurrence of a fault and which activates or deactivates the radio maintenance communication function part in response to the occurrence/non-occurrence of a fault.

2. The fault monitoring device according to claim 1, wherein the fault monitoring function part determines whether or not a radio maintenance communication with the maintenance terminal is disconnected and deactivates the radio maintenance communication function part only when the radio maintenance communication is disconnected.

3. The fault monitoring device according to claim 2, wherein the fault monitoring function part deactivates the radio maintenance communication function part after a lapse of a specified time when the radio maintenance communication with the maintenance terminal is disconnected.

4. The fault monitoring device according to claim 3, wherein the fault monitoring function part waits for predetermined time after deactivating the radio maintenance communication function part and then determines the occurrence/non-occurrence of a fault.

5. A fault monitoring method comprising:
receiving and transmitting fault information by way of radio maintenance communication with the maintenance terminal;
determining occurrence/non-occurrence of a fault; and
activating or deactivating a radio maintenance communication function in response to the occurrence/non-occurrence of a fault.

6. A fault monitoring program causing a computer to execute a procedure comprising:
receiving and transmitting fault information by way of radio maintenance communication with the maintenance terminal;
determining occurrence/non-occurrence of a fault; and
activating or deactivating a radio maintenance communication function in response to the occurrence/non-occurrence of a fault.
